# EUROPÄISCHE PATENTANMELDUNG

(11) **EP 0 683 332 A1**
(43) Veröffentlichungstag der Anmeldung: **22.11.1995**
(21) Anmeldenummer: 95107776.7
(22) Anmeldetag: 22.05.1995
(51) Int. Cl.: F16F 1/04, F16F 1/12

(54) **Schraubendruckfeder**

(30) Priorität: 20.05.1994 DE 9408791 U
(71) Anmelder: Richard Bergner GmbH & Co, D-91126 Schwabach (DE)
(72) Erfinder: Ell, Dieter, D-91126 Schwabach (DE)
(74) Vertreter: Tergau, Enno, Dipl.-Ing.

(57) **Zusammenfassung**

Bei einer Schraubendruckfeder (1) mit mindestens einem planen Federende (2, 2', 3) zum Anlegen an eine Gegenfläche (7) eines Gegenkörpers (9) ist für eine einfache Herstellung erfindungsgemäß das Federende (2, 2', 3) über mindestens annähernd den Federumfang in einer Ebene (15, 15', 15'') spiralfederartig gewendelt. Dabei kann ein Federende (2) radial nach innen gewunden sein, während das gegenüberliegende Federende (3) radial nach außen gewunden ist, wobei ein Federende (2, 2') kraftschlüssig mit dem Gegenkörper (9) verbunden sein kann.

## Beschreibung

Die Erfindung bezieht sich auf eine Schraubendruckfeder mit mindestens einem in einer Ebene liegenden Federende zum Anlegen an einen Gegenkörper.

Es ist bekannt, eine Schraubendruckfeder dadurch herzustellen, daß mindestens ein Federende plangeschliffen wird. Unabhängig davon, ob es sich um eine zylindrische, eine kegelförmige oder eine anderweitige Schraubendruckfeder handelt, verläuft dabei die Schleifebene rechtwinklig zur Federachse.

Wenn beidseitig ein ebenes Federende verlangt ist, müssen herkömmlich beide Federenden plangeschliffen werden. Dies ist ein sehr kostenintensiver, aufwendiger Arbeitsprozeß.

Der Erfindung liegt daher die Aufgabe zugrunde, eine Schraubendruckfeder der eingangs genannten Art anzugeben,
die in einfacher Weise, insbesondere in wenigen Arbeitsgängen, herstellbar ist.

Diese Aufgabe wird erfindungsgemäß dadurch gelöst, daß das Federende über mindestens annähernd den Federumfang in einer Ebene liegend spiralförmig oder spiralfederartig gewunden ist.

Die Erfindung geht dabei von der Überlegung aus, die Schraubendruckfeder, d.h. deren Federdraht, an dem mit planer Wirksamkeit auszustattenden Federende nach Art einer Windung einer Spiralfeder derart zu führen, daß der Federdraht keine Steigung mehr aufweist, jedoch innerhalb des Wirkdurchmessers des angrenzenden Windungsbereichs liegt.

In vorteilhafter Ausgestaltung erstreckt sich dieser nach Art einer Spiralfeder gestaltete Endbereich der Schraubendruckfeder über 360° und somit über den Bereich einer vollen Federwindung. Somit ist über den gesamten Umfang des Federendes eine gleichebige Auflage gewährleistet. Dabei ist es für die angestrebte Wirksamkeit der Bildung einer über den gesamten Umfang des Federendes ebenen, zur Federachse rechtwinkligen Auflagefläche unwesentlich, wenn dieser Endbereich über eine 360°- Windung hinausgeht oder nicht den Betrag einer vollen 360°-Windung erreicht.

Bei einer derartigen Schraubendruckfeder mit an einem Federende mindestens einer plan wirksamen Auflage ist die Forderung nach der planen Auflage insbesondere dadurch bedingt, daß die Schraubendruckfeder an einem festen, vorbestimmten Gegenkörper unter Vermeidung einer Schrägstellung oder eines Verkantens anliegen soll, z.B. an einem Schraubenkopf, einem Federsitz, einem Ringflansch oder an einer andersartigen Gegenfläche. Diese Forderung wird zunehmend aus montagetechnischen Gründen gestellt, damit die Schraubendruckfeder in einer vorzugsweise weitgehend festen Verbindung mit einem Bolzen, einem Gegenflansch oder dergleichen zur Bildung einer vorgefertigten Baueinheit montiert werden kann. Hier kommt dem nach Art einer Spiralfeder gewickelten Federende der Schraubendruckfeder eine weitere, vorteilhafte Funktion einer zentralen Führung dann zu, wenn dessen in der Ebene liegendes Federdrahtende radial nach innen gewunden ist. Dabei liegt das Federdrahtende zweckmäßigerweise über einen Winkelabschnitt von vorzugsweise etwa 180° an der vorhergehenden Windung an. Die Schraubendruckfeder kann dann mit diesem sich über einen möglichst großen Umfangsbereich erstreckenden inneren Ende des spiralfederartig gewundenen Federendes auf dem Umfang eines Zentriersitzes aufliegen.

Dabei entspricht der Innendurchmesser des Federendes zweckmäßigerweise dem Außendurchmesser des Zentriersitzes. Mit anderen Worten: Der wirksame Innendurchmesser des spiralfederartig gewendelten Federdrahtes an diesem Federende und der Außendurchmesser eines zapfenförmigen Ansatzes oder Sitzes des entsprechenden Gegenkörpers sind derart aufeinander abgestimmt, daß das Federende auf dem Gegenkörper aufsitzt und daß dadurch das Zusammenwirken mit einem radialen Formschlußvorsprung am Gegenkörper eine Verliersicherheit gewährleistet werden kann.

Alternativ kann das in der Ebene liegende Ende des Federdrahtes auch radial nach außen gewunden und an die vorhergehende Windung angelegt sein und mit einem inversen Radialvorsprung am Gegenkörper als Verliersicherung zusammenwirken. Dadurch wird auch eine besonders große Auflage- oder Standfläche erzielt.

Um andererseits auch bei einem derart nach außen gewendelten Spiralfederende eine zentrierte Führung in etwa der vorstehend beschriebenen Art zu erreichen, insbesondere um auch eine derartige zentrierte Führung auf einem Bolzen oder Flansch von zweckmäßig kleinem Durchmesser vornehmen zu können, ist es vorteilhaft, diesen kleinen Durchmesser dadurch zu schaffen, daß die Schraubendruckfeder kegelartig ausgebildet ist. Ihr schraubenartig gewendelter Bereich am dortigen Federende weist dann ebenfalls einen dem gewünschten kleinen Außendurchmesser des Bolzen- oder Flanschsitzes entsprechenden Innendurchmesser auf, während der anschließende, die ebene Auflagefläche bildende Federbereich durch eine sich nach außen radial vergrößernde spiralfederartige Windung erzeugt wird.

Um einen möglichst hohen Vorfertigungsgrad für die Kombination mit einem mit der Schraubendruckfeder funktionsmäßig zusammenwirkenden Teil aufzuweisen, ist eines der Federenden radial nach innen und das gegenüberliegende andere Federende radial nach außen gewendelt, wobei zweckmäßigennreise beide Federenden in der jeweiligen Ebene liegend spiralförmig gewunden sind. Dies hat den besonderen Vorteil einer erheblich vereinfachten Zugänglichkeit für eine Schneidevorrichtung zum Ablängen eines Federdrahtes bei der Fertigung der Schraubendruckfeder. Das Drehen des Federdrahtes zu einer Schraubendruckfeder erfordert es nämlich, daß am Ende eines Windevorgangs der Federdraht abgeschnitten wird, wozu das abzuschneidende Ende zweckmäßigerweise von außen zugänglich sein sollte. Aus fertigungstechnischen Gründen ist daher das beim Windevorgang anfängliche Federdrahtende radial nach innen gewunden, während das abzuschneidende Federende nach außen gewunden ist. Dabei können das eingewundene und/oder das ausgewundene Federende zur Bildung einer planen Auflagefläche in der Anlageebene liegend spiralfederartig gewendelt sein. Auch eine derart ausgebildete Schraubendruckfeder eignet sich vorteilhaft zur Bildung einer Baueinheit zusammen mit dem entsprechenden Gegenkörper, was wiederum zu dem gewünschten hohen Vorfertigungsgrad der in der Endfertigung montierten Teile führt.

Ausführungsbeispiele der Erfindung werden anhand einer Zeichnung näher erläutert. Darin zeigen:
- Fig. 1: in einer Seitenansicht eine Schraubendruckfeder mit in Lageebenen planen Federenden,
- Fig. 2: eine Stirnansicht entsprechend der Linie II-II von Fig. 1,
- Fig. 3: die Seitenansicht einer alternativ kegelförmig geformten Schraubendruckfeder, und
- Fig. 4: eine Stirnansicht entsprechend der Linie IV-IV von Fig. 3.

Die Schraubendruckfeder 1 ist zwischen ihrem oberen Federende 2 und ihrem diesem gegenüberliegenden, unteren Federende 3 in herkömmlicher Weise mit einer bestimmten, meist konstanten Steigung gewunden. Dabei weisen die einzelnen, zueinander benachbarten Windungen W in Richtung der Federachse 4 einen Abstand 5 voneinander auf.

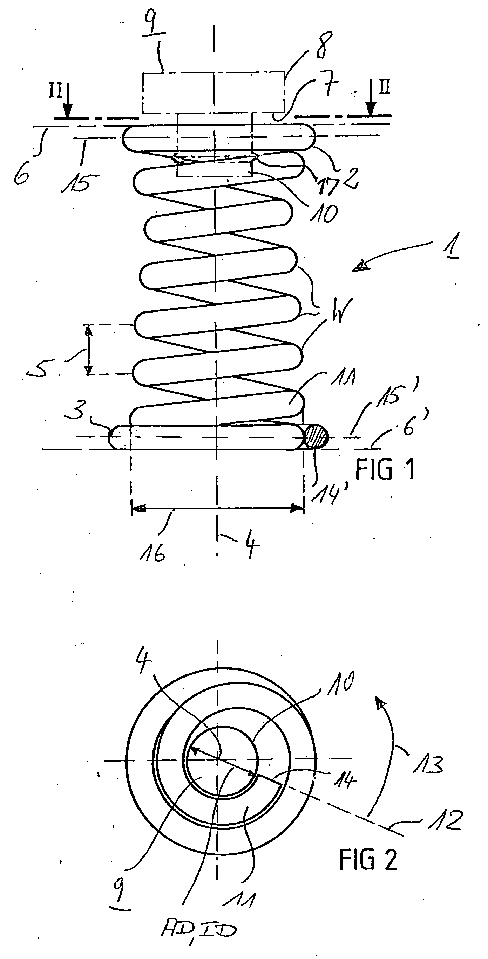

Das obere Federende 2 und das untere Federende 3 sind im Ausführungsbeispiel gemäß Figur 1 erfindungsgemäß eben ausgebildet. Dies bedeutet, daß die Federenden 2 und 3 jeweils möglichst über einen Umfangsbereich von 360° in einer Ebene 6 bzw. 6' liegen, die einen rechten Winkel mit der Federachse 4 bilden. Dadurch ist es möglich, daß die Schraubendruckfeder 1 - hier mit ihrem oberen Federende 2 - plan an der Gegenfläche 7, z.B. eines Flansches 8 eines insgesamt mit 9 bezeichneten Gegenkörpers anliegt. Dieser Gegenkörper 9 ist in Figur 1 gestrichelt dargestellt. Es kann ein rotationssymmetrischer Bolzen, ein Schraubenkopf o.dgl. sein. Von Wichtigkeit ist nur, daß der Gegenkörper 9 eine zur planen Auflageebene 6 der Schraubendruckfeder 1 parallele Anlagefläche bildet, die hier als Gegenfläche 7 bezeichnet ist. Beim vorliegenden Ausführungsbeispiel ist der Gegenkörper 9 zusätzlich mit einem sich in den Innenbereich der Schraubendruckfeder 1 hinein erstreckenden zapfenförmigen, einen Außendurchmesser AD aufweisenden Ansatz 10 ausgestattet, der eine nachstehend noch näher beschriebene Zentrierfunktion auf die Schraubendruckfeder 1 ausüben soll.

Das obere Federende 2 und das untere Federende 3 sind dadurch in der beschriebenen Weise jeweils eben ausgebildet, daß dort der Federdraht 11, d.h. das jeweils dortige Drahtende, nach Art einer Spiralfeder in einer Ebene liegend gewendelt sind. Diese spiralfederartige Wendelung erstreckt sich jeweils über etwa 360°. Dabei ist das obere Federende 2 radial nach innen gewunden, während das untere Federende radial nach außen gewunden ist.

Beim Ausführungsbeispiel gemäß Figur 1 endet z.B. die schraubenlinienartige, sich über praktisch die gesamte innere Federlänge erstreckende Windung am oberen Federende 2 im Umfangsbereich 12 (Fig. 2). Von diesem Umfangsbereich 12 an in Umfangsrichtung 13 bis zum oberen Federdrahtende 14, also um etwa 360°, nämlich im Bereich etwa einer vollen Drahtwindung, liegt der Federdraht 11 in einer zur planen Auflageebene 6 parallelen Lageebene 15. Entsprechend liegt der Federdraht 11 am unteren Federende 3 in einer Lageebene 15'.

Der Spiralwindungsbereich von etwa 360° am oberen und/oder unteren Druckfederende ist jedoch keine notwendige Einschränkung. Vielmehr kann dieser spiralfederartig in der Lageebene 15, 15' verlaufende Endbereich sich auch über mehr als 360° erstrecken. Er kann auch geringfügig kürzer sein, wenn eine nicht voll umfängliche ebene Auflage keinen Nachteil bedeutet. Es kann eine Wendelung des spiralfederartig gewundenen Federendes 2, 3 über mehr als 360° z.B. dann von besonderem Vorteil sein, wenn der nachstehend noch näher beschriebene, kraftschlüssige Zentriersitz auf dem Ansatz 10 von im Vergleich zum Außendurchmesser 16 sehr kleinem Außendurchmesser gewünscht ist. Dies kann dann der Fall sein, wenn der Zentrieransatz 10 z.B. der Außendurchmesser des Schaftes einer Schraube oder der Außendurchmesser eines Schraubengewindes selbst ist.

Von besonderem Vorteil ist, wenn das in Radialrichtung zur Federachse nach innen gewendelte Federdrahtende 14 des oberen Federendes 2 so positioniert ist, daß es auf dem Umfang des Zentrieransatzes 10 und als Verliersicherung einen radialen Vorsprung 17 am Zentrieransatz 10 hintergreift aufliegt, so daß im dortigen Bereich eine Kraftschlußverbindung zwischen Schraubendruckfeder 1 und Gegenkörper 9 vorliegt. Dann kann nämlich die gesamte Schraubendruckfeder 1 vorteilhaft dadurch manipuliert, z.B. als Baueinheit zusammen mit dem Gegenkörper 9 montiert werden, daß sie allein durch Manipulation des Gegenkörpers 9 bewegt und gehandhabt wird. Dies ist z.B. bei einer automatisierten Montage von Vorteil, weil dann die Schraubendruckfeder 1 verliersicher auf dem Gegenkörper 9 aufsitzt. Dazu ist der Innendurchmesser ID des oberen Federendes 2 an den Außendurchmesser AD des Zentrieransatzes 10 entsprechend angepaßt.

Aus fertigungstechnischen Gründen ist es besonders zweckmäßig, bei der Herstellung der Schraubendruckfeder 1 mit an ihrem einen Federende 2 radial nach innen spiralförmig eben gewundenem Federdrahtende 14 und mit an ihrem anderen Federende 3 radial nach außen spiralförmig eben gewundenem Federdrahtende 14' eine Konfiguration
gemäß Figur 1 mit z.B. konischem oder anderweitig tailliertem Federmantel zu bilden. Diese Konfiguration ist dann besonders zweckmäßig, wenn beide ringähnlichen Auflagen der Schraubendruckfeder 1 einen etwa gleichen Durchmesser aufweisen sollen.

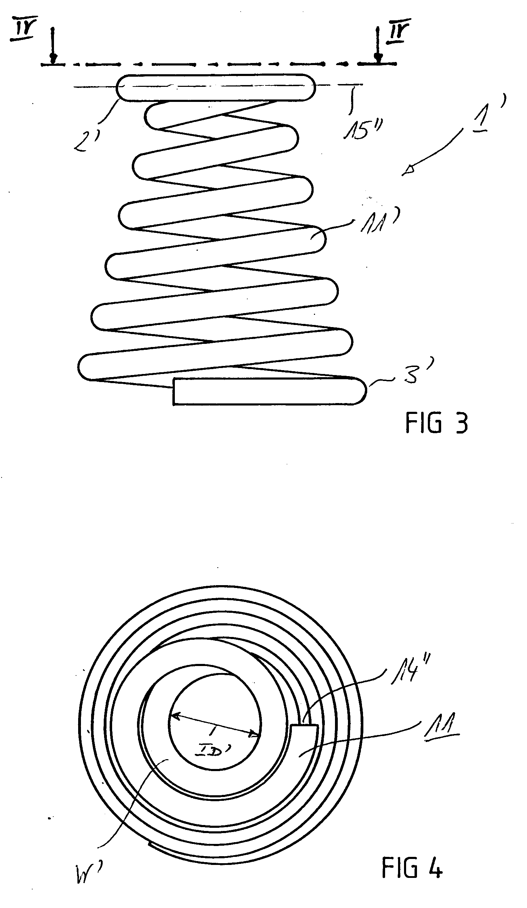

Bei einer nur mit einem ausgewundenen Federende 2' ausgestalteten Schraubendruckfeder 1', deren gegnüberliegendes Federende 3' keine 360°-Windung aufweist, die jedoch am erfindungsgemäß ausgestalteten Federende 2' auch die beschriebene Zentrier- und Fixierfunktion übernehmen soll, ist eine kegelartig ausgestaltete Mantelform gemäß Figur 3 mit sich konisch nach unten vergrößernden Durchmessern benachbarter Windungen des Federdrahtes 11' zweckmäßig. Dabei ist der Innendurchmesser ID' der vorhergehenden, in der Lageebene 15'' liegenden Windung W' an den Außendurchmesser des (nicht dargestellten) Zentrieransatzes angepaßt, während das Federdrahtende 14'' radial nach außen gewunden ist und dabei über einen Winkelbereich von etwa 180° an dieser vorhergehenden Windung W' anliegt (Figur 4).

Das erfindungsgemäß eben ausgebildete Federende 2, 2', 3 oder die beiden ebenen Federenden 2, 2' bzw. 3 der Schraubendruckfeder 1 federn nicht in sich in Längsrichtung der Federachse 4 und üben somit - bezogen auf die Schraubendruckfeder 1 - keine Federwirkung aus. Die zum Zweck der beschriebenen Kraftschlußverbindung möglicherweise gewünschte Federwirkung ist radial nach innen gerichtet. Sie sichert den kraftschlüssigen Sitz auf dem Zentrieransatz 10 des Gegenkörpers 9. Zwischen den beiden Federenden 2, 3 bzw. 2', 3' befinden sich die in axialer Richtung 4 federnden Windungen W, W' der Schraubendruckfeder 1, 1'. Die Federkraft wird daher parallel zur Achse des Gegnkörpers 9 übertragen. Das Federende 2, 2' stützt sich an der planen Auflageebene, d.h. der Gegenfläche 7 des Gegenkörpers 9 ab, wodurch ein Schrägstellen und/oder Verkanten sicher vermieden ist.

### Bezugszeichenliste

- 1: Schraubendruckfeder
- 2,2': oberes Federende
- 3,3': unteres Federende
- 4: Federachse
- 5: Abstand zw. den Windungen
- 6, 6': plane Auflageebene
- 7: Gegenfläche
- 8: Flansch
- 9: Gegenkörper
- 10: Zentrieransatz
- 11: Federdraht
- 12: Umfangsbereich
- 13: Umfangsrichtung
- 14: oberes Federdrahtende
- 14': unteres Federdrahtende
- 15: Lageebene
- 16: Druckfeder-Außendurchmesser
- 17: Radialvorsprung

- AD.: Ansatz-Außendurchmesser
- ID.: Federende-lnnendurchmesser
- W, W'.: Windungen

## Patentansprüche

1. Schraubendruckfeder mit mindestens einem in einer Ebene liegenden Federende (2, 2', 3) zum Anlegen an eine Gegenfläche (7) eines Gegenkörpers (9),
dadurch gekennzeichnet,
daß das Federende (2, 2', 3) über mindestens annähernd den Federumfang in einer Ebene (15, 15', 15'') liegend spiralförmig gewunden ist.

2. Schraubendruckfeder nach Anspruch 1,
dadurch gekennzeichnet,
daß sich der spiralförmig gewendelte Bereich des Federendes (2, 2', 3) über etwa 360° erstreckt.

3. Schraubendruckfeder nach Anspruch 1 oder 2,
dadurch gekennzeichnet,
daß ihr in der Ebene (15) liegendes Ende (14) radial nach innen gewunden ist.

4. Schraubendruckfeder nach Anspruch 1 oder 2,
dadurch gekennzeichnet,
daß ihr in der Ebene (15', 15'') liegendes Ende (14', 14'') radial nach außen gewunden ist.

5. Schraubendruckfeder nach Anspruch 3 oder 4,
dadurch gekennzeichnet,
daß ihr in der Ebene (15, 15', 15'') liegendes Ende (14, 14', 14'') über einen Winkelabschnitt von etwa 180° an der vorhergehenden Windung (W, W') anliegt.

6. Schraubendruckfeder nach Anspruch 1 oder 2,
dadurch gekennzeichnet,
daß beide Federenden (2, 3) in jeweils einer Ebene (15, 15') liegend spiralförmig gewunden sind, wobei eines der Enden (14) radial nach innen und das gegenüberliegende Ende (14') radial nach außen gewunden ist.

7. Schraubendruckfeder nach einem der Ansprüche 1 bis 6,
dadurch gekennzeichnet,
daß der Innendurchmesser (ID, ID') des Federendes (2, 2') dem Außendurchmesser (AD) des vom Federende (2, 2') zu umschließenden zapfenförmigen Ansatzes (10) eines Gegenkörpers (9) entspricht.

8. Schraubendruckfeder nach einem der Ansprüche 1 bis 7,
dadurch gekennzeichnet,
daß zwischen den Federenden (2, 2'; 3, 3') benachbarte Federwindungen (W, W') unterschiedliche Durchmesser aufweisen.

9. Schraubendruckfeder nach Anspruch 8,
dadurch gekennzeichnet,
daß die zwischen den Federenden (2', 3') federnden Windungen (W') einen konischen Federmantel bilden.

10. Schraubendruckfeder nach Anspruch 8,
dadurch gekennzeichnet,
daß die zwischen den Federenden (2, 3) federnden Windungen einen taillierten Federmantel bilden.

11. Schraubendruckfeder nach einem der Ansprüche 1 bis 10,
dadurch gekennzeichnet,
durch die Bildung einer Baueinheit mit dem Gegenkörper (9).
